# EUROPÄISCHE PATENTSCHRIFT

(11) **EP 0 927 310 B1**
(45) Veröffentlichungstag und Bekanntmachung des Hinweises auf die Patenterteilung: **07.06.2000**
(21) Anmeldenummer: 97909135.2
(22) Anmeldetag: 17.09.1997
(51) Int. Cl.: F16C 11/06, B29C 45/14

(54) **KUGELGELENK UND VERFAHREN ZU SEINER HERSTELLUNG**
BALL-AND-SOCKET JOINT AND METHOD OF PRODUCING THE SAME
JOINT A ROTULE ET SON PROCEDE DE PRODUCTION

(30) Priorität: 19.09.1996 DE 19638252
(43) Veröffentlichungstag der Anmeldung: 07.07.1999
(73) Patentinhaber: Sachsenring Automobiltechnik AG, 08058 Zwickau (DE)
(72) Erfinder: RABE, Jürgen, D-91315 Höchstadt (DE)
(74) Vertreter: Hufnagel, Walter, Dipl.-Ing., Dipl.-Wirtsch.-Ing.
(86) Internationale Anmeldenummer: DE9702083
(87) Internationale Veröffentlichungsnummer: WO9812438

(56) Entgegenhaltungen:
- FR-A- 1 089 843
- FR-A- 1 396 331
- FR-A- 2 436 278
- GB-A- 1 121 004
- US-A- 2 919 150

## Beschreibung

Die vorliegende Erfindung bezieht sich auf ein Kugelgelenk gemäß dem Oberbegriff des Anspruchs 1 und auf ein Verfahren zur Herstellung eines derartigen Kugelgelenks gemäß dem Oberbegriff des Anspruchs 34.

Ein derartiges Kugelgelenk und ein Verfahren zu dessen Herstellung sind aus der GB-A-1 121 004 bekannt. Dort besteht das ringförmige Wandteil aus einem Metallring mit angeformtem, seitlich abstehendem Befestigungsflansch. Im Metallring ist die Kugel im Abstand angeordnet und der Metallring ist entweder ganz mit einem als Lagermaterial dienenden Gehäusematerial aus Kunststoff umspritzt oder er ist nur teilweise derart umspritzt, daß die Außenseite des Metallrings einen Teil und ein über die Länge des Metallrings überstehender Längsabschnitt des Gehäusematerials den Restteil der Außenwand des Kugelgelenkgehäuses bilden.

Weiterhin ist es aus der FR-A-1 396 331 bekannt, ein aus Metall bestehendes Kugelgelenkgehäuse mit ringförmigem Gehäuseteil bei eingesetzter Kugel mit Lagermaterial auszuspritzen.

Mit der vorliegenden Erfindung soll die Aufgabe gelöst werden, ein derartiges Kugelgelenk rationell herstellen zu können.

Gelöst wird diese Aufgabe durch die im Anspruch 1 angegebenen Merkmale bzw. durch die im Anspruch 34 angegebenen Verfahrensschritte.

Durch die Verwendung von Rohrprofilabschnitten anstelle der bekannten gegossenen Metallringe bzw. Metallgehäuse kann die Wandung des Kugelgelenkgehäuses sehr preiswert hergestellt werden, indem sie von Profilrohren in entsprechender Größe abgetrennt wird. Da diese Wandung des Kugelgelenkgehäuses über deren gesamte Länge mit Gehäusematerial ausgefüllt wird, bildet der Rohrprofilabschnitt die gesamte stabile Außenwand des Kugelgelenkgehäuses.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1: eine Ausführung eines Kugelgelenks ohne Lager-Zwischenschicht,
- Fig. 2: eine Ausführung eines Kugelgelenks mit Lager-Zwischenschicht, die
- Fig. 3 bis 7: mögliche Ausführungsformen eines Wandteils,
- Fig. 8: eine zweiteilige Form zur Herstellung eines Kugelgelenks gemäß Fig. 1, die
- Fig. 9: eine dreiteilige Form zur Herstellung eines Kugelgelenks gemäß Fig. 2 und die
- Fig. 10 bis 13: vorteilhafte Weiterbildungen der Erfindung.

In der Zeichnung ist ein Kugelgelenkgehäuse 1 eines Kugelgelenks K gezeigt, das einen äußeren Wandteil 2 aufweist, dessen innerer Raum 2.1 mit einem Gehäusematerial 3 ausgegossen oder ausgespritzt ist. Im Kugelgelenkgehäuse 1 wird beim Eingießen oder Einspritzen des Gehäusematerials 3 eine Kugel 4 in einer Aussparung 5 desselben derart eingebettet, daß der an der Kugel 4 angebrachte Kugelzapfen 6 aus dem Gehäusematerial 3 nach außen absteht. Die Kugel 4 ist so eingebettet, daß sie in an sich bekannter Weise rotationsbeweglich ist.

Der Wandteil 2 besteht aus einem als Rohr oder in Rohrform gegossenen, gezogenen oder extrudierten Material aus Kunststoff oder Metall. Bei der Herstellung aus Metall besteht der Wandteil 2 vorteilhaft aus Aluminium, Magnesium, Stahl, rostfreiem Stahl, Titan oder dgl.. Wird ein Kunststoff verwendet, so kann dieser unverstärkt oder mit Zusätzen,beispielsweise in Form von Fasern und/oder Partikeln, verstärkt sein. Bevorzugt kommen Thermoplaste oder Duroplaste zur Anwendung. Beispielsweise besteht der Wandteil 2 aus einem oder mehreren der Kunststoffe Polyamid, Polyimid, Polyethylen, Polyurethan, Polyepoxid, Polyester oder dgl.. Bei Herstellung von Rohren besteht der Wandabschnitt 2 aus jeweils einem Rohrabschnitt desselben.

Als Gehäusematerial 3 wird ebenfalls bevorzugt ein Kunststoff auf der Basis eines Thermoplasts oder Duroplasts, beispielsweise Polyamid, Polyimid, Polyurethan, Polyethylen, Polypropylen oder dgl. verwendet.

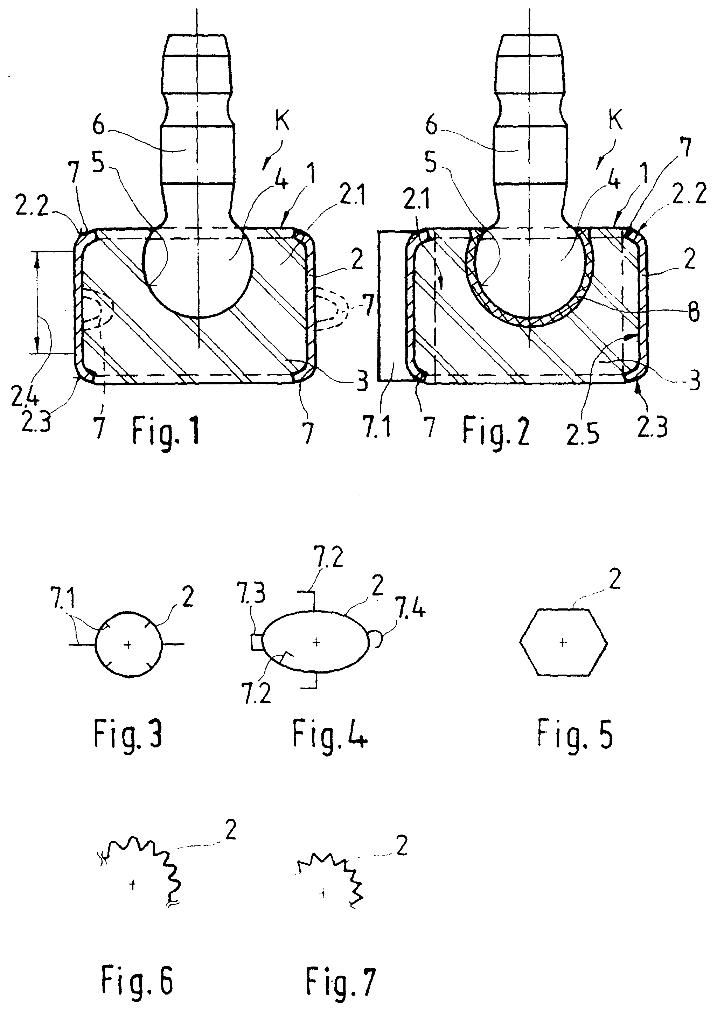

Der Wandteil 2 besitzt Verankerungselemente 7, die in Fig. 1 im Bereich der Randabschnitte 2.2 und 2.3 vorgesehen und nach innen umgebogen sind. Dies geschieht durch Umbördeln oder durch Stauchen.

Vorzugsweise werden die Verankerungselemente 7, die zugleich auch als Versteifungselemente 7.1 dienen können, beim Extrudieren der Rohre in Form von Stegen oder Flügeln 7.1 erzeugt. Die Versteifungselemente 7.1 verlaufen in Längsrichtung des Rohres. Die Verankerungselemente 7 bzw. Versteifungselemente 7.1 können innen und/oder außen an der Rohrwand angeformt sein. Dies ist anhand der Fig. 3 schematisch als Rohrquerschnitt dargestellt. Die Elemente 7 und/oder 7.1 können auch als Anschraubflächen ausgebildet sein oder dafür verwendet werden.

Gemäß Fig. 4 können die Elemente in Form von Winkeln 7.2, U- oder O-förmigen, geschlossenen Bügeln 7.3 oder offenen Bügeln 7.4 angeformt sein.

Gemäß Fig. 2 sind die Verankerungselemente 7 in Form von Wülsten dadurch erzeugt, daß das Material des Wandteils 2 in seinem Mittenbereich 2.4 auf der Innenseite 2.5 spanabhebend bearbeitet ist. Zweckmäßig geschieht dies durch Ausdrehen oder Ausfräsen der Innenseite 2.5. Weitere Wülste können auch im Mittenbereich 2.4 vorgesehen sein.

Auch können im Wandteil 2, auch im Mittenbereich 2.4, nach innen und/oder außen ragende Verankerungselemente 7, wie Wülste, durch Stauchen erzeugt sein, wie in der Fig. 1 gestrichelt dargestellt ist.

Der Profilquerschnitt des Wandteils 2 kann gemäß den in den Fig. 3 bis 7 schematisch dargestellten Querschnitten rund (Fig.3), oval (Fig.4), drei- oder mehreckig bzw. polygonartig (Fig.5), gewellt (Fig. 6) oder gezackt (Fig. 7) ausgebildet sein.

Die Verankerungselemente 7 können in Form von nach innen oder nach außen weisenden Vorsprüngen ausgebildet sein. Beispielsweise können sie in Form von Erhöhungen, Buckeln, Spitzen oder dgl. in das Wandmaterial eingedrückt sein.

Gemäß dem in Fig. 2 dargestellten Ausführungsbeispiel kann zwischen dem Gehäusematerial 3 und der Kugel 4 eine diese zumindest im Bereich der Aussparung 5 umgebende Lager-Zwischenschicht 8 vorgesehen sein. Diese besteht vorzugsweise aus einem Material mit geringem Reibungskoeffizienten. Bei Verwendung eines Kunststoffs aus Thermoplast oder aus Duroplast besteht dieses Material vorzugsweise aus Polyamid, Polyimid, Polyethylen oder einem Fluorkohlenstoff, wie Polytetrafluorethylen, Polytetrafluorpropylen oder dgl..

Am Wandteil 2 können nach außen oder nach innen ragende Stege 7.1 und/oder Flügel und/oder Anschraubflächen vorgesehen sein, mit denen das Kugelgelenk K an einem dafür vorgesehenen Objekt befestigt werden kann.

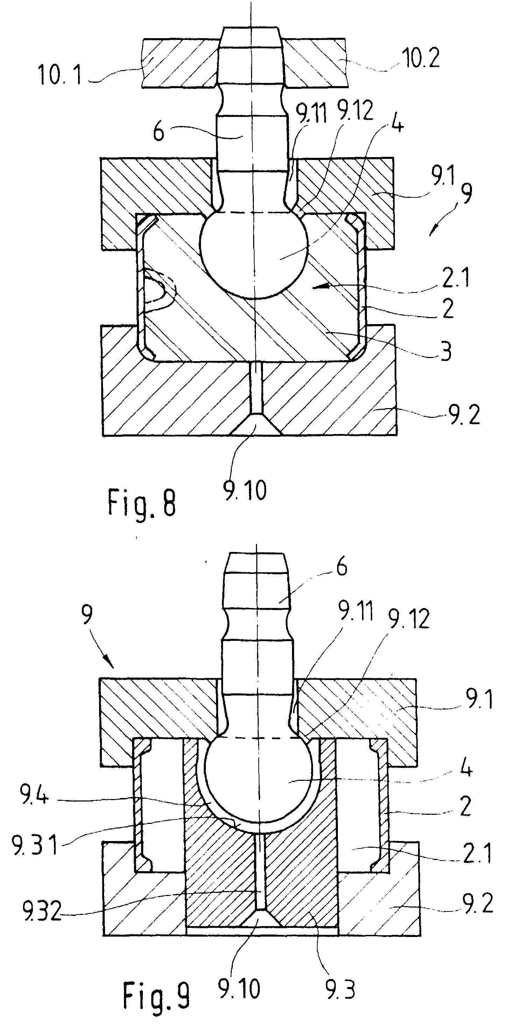

Das Kugelgelenk K kann mit einer Form 9 aus zwei oder mehr Werkzeugteilen hergestellt werden. Beispielsweise wird die in Fig. 1 dargestellte Ausführungsform gemäß Fig. 8 in einer zweiteiligen Form 9 mit den Werkzeugteilen 9.1 und 9.2 so hergestellt, daß der Kugelzapfen 6 durch eine Öffnung 9.11 des Werkzeugteils 9.1 hindurchgeführt und außerhalb der Form 9 durch Halteelemente 10.1 und 10.2 oder dgl. gehalten wird. Die Halterung erfolgt so, daß die Kugel 4 hinsichtlich des Wandteils 2 und entsprechend auch des Werkzeugteils 9.1 in der vorgesehenen Position fixiert ist. Das Werkzeugteil 9.1 besitzt einen Auflagerand 9.12, der an der Kugel 4 über einen Bereich, der kleiner ist als die Kugelhälfte dicht anliegt. Der Rand 9.12 besitzt also z.B. einen Radius, der kleiner ist als der Kugelradius.

Nach dem Aufsetzen der Werkzeugteile 9.1 und 9.2 auf die zugeordneten Randabschnitte 2.2 und 2.3 des Wandteils 2 wird der so gebildete Raum 2.1 über die Einspritzöffnung 9.10 mit dem Gehäusematerial 3 ausgefüllt, indem dieses eingegossen oder eingespritzt wird. Nach dem Erstarren des Gehäusematerials 3 wird die Form 9 geöffnet und das fertige Kugelgelenk K aus der Form 9 ausgestoßen.

Die Herstellung eines Kugelgelenks K mit einer Lager-Zwischenschicht 8 auf der Kugel 4 bzw. zwischen der Kugel 4 und dem Gehäusematerial 3 erfolgt beispielsweise gemäß Fig. 9 mit einer drei- oder mehrteiligen Form 9. Hierbei ist im Werkzeugteil 9.2 ein weiteres Werkzeugteil 9.3 vorgesehen, das zur Kugel 4 hin bzw. von dieser weg verschiebbar gelagert ist. Das Werkzeugteil 9.3 besitzt gegenüber der Kugel 4 eine Vertiefung 9.31, die derart bemessen ist, daß sie die Kugel 4 von innen in einem Abstand von etwa 0,2 bis 3 mm, insbesondere von etwa 1,5 bis 2 mm, umgreift. Dadurch entsteht ein Formhohlraum 9.4, in den über eine am Werkzeug 9.3 vorgesehene Eingußöffnung 9.10 und einen Eingußkanal 9.32 ein Lagermaterial eingegossen oder eingespritzt wird, das die Lager-Zwischenschicht 8 (Fig. 2) bildet. Nach dem Erstarren oder zumindest teilweisen Erstarren des Lagermaterials wird der Werkzeugteil 9.3 zurückgezogen bis er beispielsweise mit dem Werkzeugteil 9.2 fluchtet. Bei vollständig geschlossener Form 9 wird dann über die Eingußöffnung 9.10 oder über eine andere Eingußöffnung das Gehäusematerial 3 in den verbleibenden Raum 2.1 zwischen dem Wandteil 2 und den Werkzeugteilen 9.1, 9.2 und 9.3 eingegossen oder eingespritzt. Dabei wird die mit der Lager-Zwischenschicht 8 versehene Kugel 4 in das Gehäusematerial 3 eingebettet. Nach dem Erstarren des Gehäusematerials 3 wird das fertige Kugelgelenk K aus der Form 9 ausgestoßen.

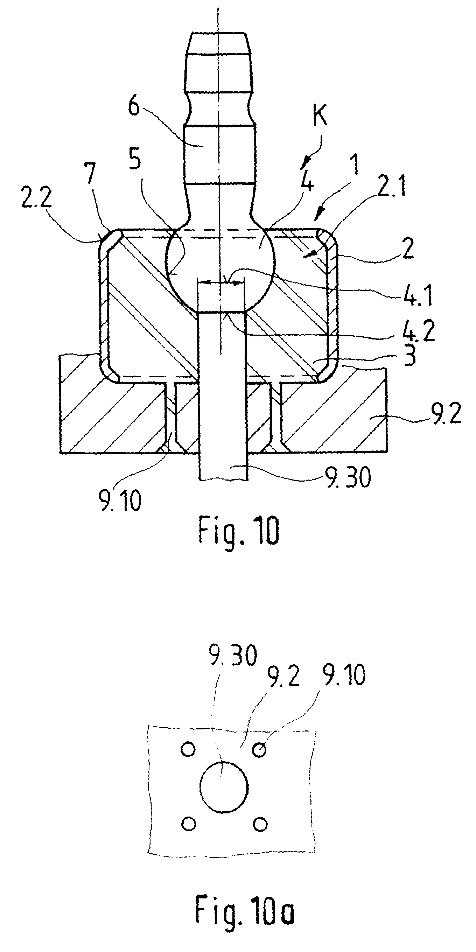

Bei dem in Fig. 10 dargestellten Ausführungsbeispiel ist eine Kugel 4 vorhanden, die an der dem Kugelzapfen 6 gegenüberliegenden Stelle in einem Abschnitt 4.1 eine plane Fläche 4.2 aufweist. Derartige plane, kegelförmige oder auch stufenförmige Flächen 4.2 entstehen bei der Herstellung der Kugel 4 mit Kugelzapfen 5 aus einem Stangenabschnitt, beispielsweise wenn die Kugel vom Stangenabschnitt abgestochen wird. Wird eine derartige Kugel 4 umspritzt oder umgossen, dann wird der Kugelsitz entsprechend unrund und erhebt sich aus der Kugelfläche nach innen. Damit wird die Beweglichkeit der Kugel 4 entweder ganz verhindert oder zumindest schwergängig.

Gemäß einer vorteilhaften Weiterbildung der Erfindung wird daher beim Spritzen, Spritzgießen oder Gießen des Gehäusematerials 3 im Werkzeugteil 2 ein verschiebbarer Formstempel 9.30 mit seiner Endfläche gegen die Kugel 4 gedrückt. Die Endfläche ist so groß und derart ausgebildet, daß sie die Fläche 4.2 abdichtet. Die Fläche 4.2 wird daher nicht mit Gehäusematerial 3 beschichtet. Dadurch bleibt die Kugel 4 trotz deren Unrundheit weiterhin leicht beweglich gelagert.

Bei Anwendung dieses Formstempels 9.30 ist die Herstellung der Kugel 4 unkritisch und sie kann daher rationell und kostengünstig hergestellt werden. Dies verbilligt die Herstellung des ganzen Kugelgelenks deutlich.

Durch den Formstempel 9.30 entsteht im Gehäusematerial 3 eine Öffnung 3.2, die bevorzugt in geeigneter Weise verschlossen wird.

Zusätzlich zu den genannten Vorteilen wird durch den Formstempel 9.30 unter anderem eine gute Fixierung der Kugel 4, einschließlich des Kugelzapfens 6 in der Werkzeugform 9.1, 9.2 gewährleistet. Der Formstempel 9.30 kann daher auch mit Vorteil bei voll ausgebildeten Kugeln 4 eingesetzt werden. Bei Anwendung des Formstempels 9.30 ist vorzugsweise wenigstens eine Angußstelle 9.10 seitlich vom Formstempel 9.30 angebracht, wie in der Fig. 10a anhand eines Beispiels mit vier Angußstellen 9.10 gezeigt ist.

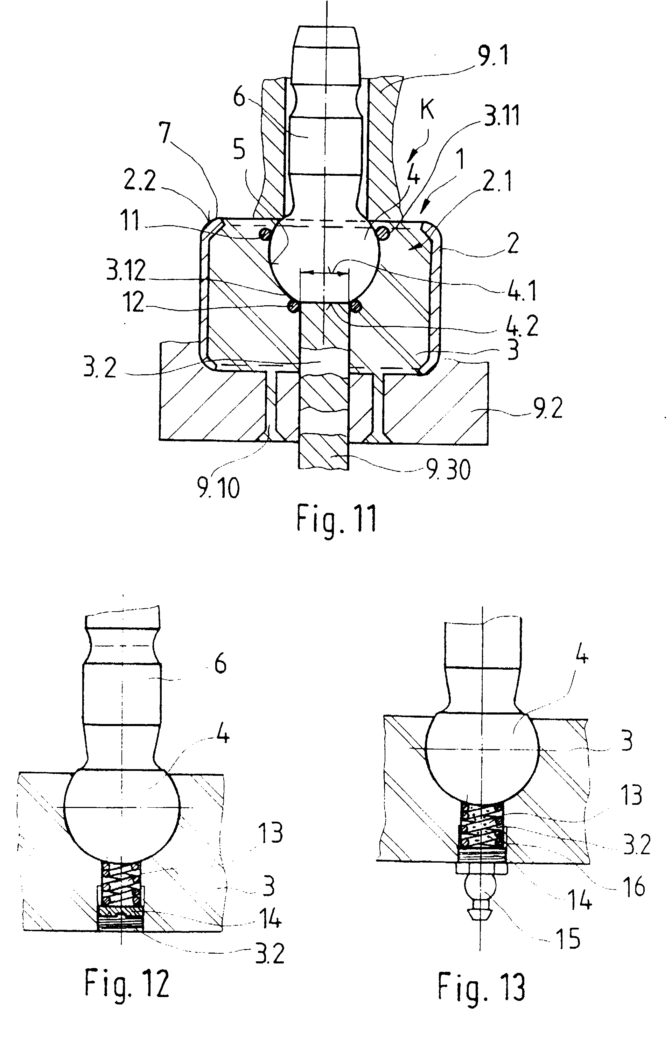

Gemäß dem in Fig. 11 dargestellten Ausführungsbeispiel kann, vorzugsweise mittels der Formwerkzeuge 9.1, 9.2 und 9.30 ein bzw. je ein Dichtungs-O-Ring 11 bzw. 12 aus einem Kautschuk oder einem Elastomer eingesetzt oder insbesondere bei der Herstellung des Gehäusematerials 3 bzw. der Lager-Zwischenschicht 8 mit eingeformt werden. Dieser bzw. diese O-Ringe 11 dichten den jeweiligen Endrand 3.11 bzw. 3.12 nach außen hin ab.

Die durch den Formstempel 9.30 erhaltene Öffnung 3.2 im Gehäusematerial 3 und gegebenenfalls auch in der Lager-Zwischenschicht 8 kann durch eine eingesetzte, eingepreßte oder eingegossene Dichtung, beispielsweise durch ein Elastomer oder einen Kautschuk, auch in Form eines geschlossen- oder offenporigen Schaumstoffs, geschlossen werden. Zur Verbesserung der Gleiteigenschaften der Kugel 4 im Gehäusematerial 3 bzw. in der Lager-Zwischenschicht 8 kann bei Verwendung von offenporigem Schaumstoff dieser mit einem Schmiermittel, beispielsweise einem Öl, Fett oder einer Mischung derselben getränkt oder imprägniert sein.

In die Öffnung 3.2 kann auch gemäß Fig. 12 wenigstens eine Druckfeder 13 aus Kunststoff oder insbesondere aus Metall, beispielsweise in Form einer Schraubenfeder oder Tellerfeder, angeordnet sein. Diese kann bzw. können durch ein fest einsetzbares Fixierelement 14, beispielsweise einem als Dichtungselement dienenden Verschlußstopfen aus Kunststoff oder Metall, lagegesichert und gegen die Kugel 4 bzw. deren Abschnitt 4.1 vorgespannt sein. Die Feder bzw. Federn 13 gewährleistet(n) Spielfreiheit der Kugel 4 und verhindert(n) das Entstehen von Klappergeräuschen und von unnötigem Verschleiß. Das Fixierelement 14 kann in das Gehäusematerial 3 eingeschnappt, eingepreßt, eingeschweißt, eingeklebt und/oder eingebördelt sein. Auch kann es, gegebenenfalls zusätzlich, ein Außengewinde aufweisen und z.B. gemäß Fig. 12 als einschraubbare Scheibe ausgebildet sein.

Die Öffnung 3.2 kann, auch bei Anwendung von Druckfedern 13, mit Öl und/oder Fett gefüllt sein. Zweckmäßig kann das Fixierelement 14 aus einem insbesondere einschraubbaren Schmiernippel 15 bestehen, wie anhand der Fig. 13 gezeigt ist. Auch können der Schmiernippel 15 und das Fixierelement 14 so ausgebildet sein, daß der Schmiernippel 15 in das Fixierelement 14 eingeschraubt werden kann. In der Fig. 13 ist, als Punkte dargestellt, ein Öl oder Fett oder ein Öl-Fett-Gemisch schematisch dargestellt.
+) en formation serrée de l'outil de formage (9.1, 9.2)

## Patentansprüche

1. Kugelgelenk (K) mit einem Kugelgelenkgehäuse (1), welches einen rohrförmigen Wandteil (2) aufweist, der sich im wesentlichen koaxial zu dem die Kugel (4) tragenden, nach außen abstehenden Kugelzapfen (6) erstreckt und die Kugel (4) mit Abstand umgibt und wobei bei eingesetzter Kugel (4) ein Gehäusematerial (3) den zwischen dem Wandteil (2) und der Kugel (4) gebildeten Freiraum (2.1) ausfüllt und die Kugel (4) derart umgibt, daß diese in einer Aussparung (5), die die Kugel (4) um mehr als ihre Halbschale umgibt, im Gehäusematerial (3) rotationsbeweglich gelagert ist, dadurch gekennzeichnet, daß der rohrförmige Wandteil (2) aus einem Rohrprofilabschnitt mit nach innen und/oder außen weisenden Verankerungselementen (7) besteht, und daß das eingegossene oder eingespritzte Gehäusematerial (3) lediglich den Freiraum (2.1) zwischen dem Rohrprofilabschnitt und der Kugel (4) ausfüllt und sich über die ganze Länge des Rohrprofilabschnitts, jedoch nicht darüber hinaus erstreckt, so daß der den ringförmigen Wandteil (2) bildende Rohrprofilabschnitt die gesamte radiale Außenwand des Kugelgelenkgehäuses (1) bildet.

2. Kugelgelenk nach Anspruch 1, dadurch gekennzeichnet, daß zwischen der Aussparung (5) und der Kugel (4) eine Lager-Zwischenschicht (8) vorgesehen ist.

3. Kugelgelenk nach Anspruch 1 oder 2, dadurch gekennzeichnet, daß der Profilquerschnitt des Wandteils (2) rund oder oval ausgebildet ist.

4. Kugelgelenk nach Anspruch 1 oder 2, dadurch gekennzeichnet, daß der Profilquerschnitt des Wandteils (2) drei- oder mehreckig, beispielsweise polygon, gewellt oder gezackt ausgebildet ist.

5. Kugelgelenk nach einem der Ansprüche 1 bis 4, dadurch gekennzeichnet, daß der Wandteil (2) aus Guß- oder Spritzguß, aus Metall oder aus unverstärktem oder mittels Einlagerungen verstärktem Kunststoff besteht.

6. Kugelgelenk nach Anspruch 5, dadurch gekennzeichnet, daß der aus Metall bestehende Wandteil (2) aus einem der Metalle Aluminium, Stahl, nichtrostender Stahl, Titan, Magnesium oder dgl. besteht.

7. Kugelgelenk nach Anspruch 5, dadurch gekennzeichnet, daß der aus Kunststoff bestehende Wandteil (2) aus unverstärktem oder mittels Einlagerungen verstärktem Kunststoff aus oder auf der Basis von Polyamid, Polyimid, Polyurethan, Polyethylen, Polyepoxid oder Polyester oder aus zwei oder mehr dieser Materialien besteht.

8. Kugelgelenk nach einem der Ansprüche 1 bis 7, dadurch gekennzeichnet, daß der Wandteil (2) aus einem Extrudat besteht.

9. Kugelgelenk nach einem der Ansprüche 1 bis 7, dadurch gekennzeichnet, daß der Wandteil (2) aus Guß oder Spritzguß besteht.

10. Kugelgelenk nach einem der Ansprüche 1 bis 9, dadurch gekennzeichnet, daß der Wandteil (2) aus einem gestauchten Rohrprofil besteht.

11. Kugelgelenk nach einem der Ansprüche 1 bis 10, dadurch gekennzeichnet, daß der Wandteil (2) spanabhebend bearbeitet ist.

12. Kugelgelenk nach einem der Ansprüche 1 bis 11, dadurch gekennzeichnet, daß der Wandteil (2) als Verankerungselemente (7) nach innen und/oder nach außen ragende Vorsprünge aufweist.

13. Kugelgelenk nach Anspruch 12, dadurch gekennzeichnet, daß nach innen ragende Vorsprünge (7) im Randbereich (2.2, 2.3) des Wandteils (2) angebracht sind.

14. Kugelgelenk nach Anspruch 12 oder 13, dadurch gekennzeichnet, daß die nach innen ragenden Vorsprünge (7) als angestauchter oder umgebördelter Rand oder als entsprechende Randabschnitte ausgebildet sind.

15. Kugelgelenk nach Anspruch 12 oder 13, dadurch gekennzeichnet, daß die nach innen ragenden Vorsprünge (7) aus dem Material der Innenseite (2.5) des Wandteils (2) spanabhebend hergestellt sind.

16. Kugelgelenk nach einem der Ansprüche 1 bis 15, dadurch gekennzeichnet, daß der Wandteil (2) nach innen gerichtete und/oder nach außen abstehende, koaxial zur Rohrachse verlaufende, als Stege (7.1) und/oder Flügel und/oder Anschraubflächen ausgebildete Verankerungs- und/oder Verstärkungselemente aufweist.

17. Kugelgelenk nach einem der Ansprüche 1 bis 16, dadurch gekennzeichnet, daß die Lager-Zwischenschicht (8) aus einem Material mit geringem Reibungskoeffizienten besteht.

18. Kugelgelenk nach Anspruch 17, dadurch gekennzeichnet, daß die Lager-Zwischenschicht (8) aus Kunststoff besteht.

19. Kugelgelenk nach Anspruch 18, dadurch gekennzeichnet, daß der Kunststoff aus einem Thermoplast oder einem Duroplast, wie Polyamid, Polyimid oder Polyethylen oder aus Polyfluorkohlenstoff oder aus Mischungen von wenigstens zwei dieser Materialien besteht.

20. Kugelgelenk nach einem der Ansprüche 1 bis 19, dadurch gekennzeichnet, daß es eine Kugel (4) besitzt, deren Kugeloberfläche an einer insbesondere herstellungsbedingten Stelle (4.2) nicht vollständig ausgebildet ist und daß im Gehäusematerial (3) und gegebenenfalls auch in der Lager-Zwischenschicht (8) durch einen Formstempel (9.30) des Formwerkzeugs (9.2) eine bis zu der Stelle (4.2) der Kugeloberfläche reichende Öffnung (3.2) angebracht ist.

21. Kugelgelenk nach einem der Ansprüche 1 bis 19, dadurch gekennzeichnet, daß bei vollständig ausgebildeter Kugel im Gehäusematerial (3) und gegebenenfalls auch in der Lager-Zwischenschicht (8) durch einen Formstempel (9.30) des Formwerkzeugs (9.2) eine bis zu der Kugeloberfläche reichende Öffnung (3.2) angebracht ist.

22. Kugelgelenk nach Anspruch 20 oder 21, dadurch gekennzeichnet, daß die Öffnung (3.2) bzw. die Öffnung (3.2) und die nichtvollständig ausgebildete Stelle (4.2) auf der dem Kugelzapfen (6) gegenüberliegenden Seite vorgesehen ist bzw. sind.

23. Kugelgelenk nach einem der Ansprüche 20 bis 23, dadurch gekennzeichnet, daß die Öffnung (3.2) mit einem Elastomer oder mit einem Kautschuk verschlossen ist.

24. Kugelgelenk nach Anspruch 23, dadurch gekennzeichnet, daß ein geschäumtes, offenporiges Elastomer oder ein entsprechender Kautschuk vorgesehen ist.

25. Kugelgelenk nach einem der Ansprüche 20 bis 24, dadurch gekennzeichnet, daß an den Endrändern (3.11, 3.12) ein bzw. je ein Dichtungs-O-Ring (11 und/oder 12) eingesetzt, insbesondere eingeformt ist bzw. sind.

26. Kugelgelenk nach einem der Ansprüche 20 bis 25, dadurch gekennzeichnet, daß in der Öffnung (3.2) wenigstens eine Druckfeder (13), insbesondere eine Schrauben- oder Tellerfeder, vorgesehen und mittels eines Fixierelements (14) gegen die Kugel (4) vorgespannt ist bzw. sind.

27. Kugelgelenk nach Anspruch 26, dadurch gekennzeichnet, daß das Fixierelement (14) als Schraubelement ausgebildet ist und die Öffnung (3.2) ein entsprechendes Gewinde aufweist.

28. Kugelgelenk nach Anspruch 27, dadurch gekennzeichnet, daß das Fixierelement (14) eingepreßt, eingeschweißt, eingeschnappt, eingeklebt oder eingebördelt ist.

29. Kugelgelenk nach einem der Ansprüche 26 bis 28, dadurch gekennzeichnet, daß das Fixierelement (14) als Schmiernippel (15) ausgebildet ist.

30. Kugelgelenk nach einem der Ansprüche 26 bis 29, dadurch gekennzeichnet, daß das Fixierelement (14) aus Metall besteht.

31. Kugelgelenk nach einem der Ansprüche 26 bis 29, dadurch gekennzeichnet, daß das Fixierelement (14) aus Kunststoff besteht.

32. Kugelgelenk nach einem der Ansprüche 26 bis 31, dadurch gekennzeichnet, daß die Druckfeder(n) (13) aus Metall besteht bzw. bestehen.

33. Kugelgelenk nach einem der Ansprüche 26 bis 31, dadurch gekennzeichnet, daß die Druckfeder(n) (13) aus Kunststoff besteht bzw. bestehen.

34. Verfahren zur Herstellung eines Kugelgelenks nach einem der Ansprüche 1 bis 33, wobei ein rohrförmiger Wandteil (2) in eine zwei- oder mehrteilige Spritz- oder Gießform (9) eingelegt und in diesem die Kugel (4) im Abstand vom Wandteil (2) über ihren Kugelzapfen (6) eingesetzt und an der ihr zugedachten Position bezüglich des rohrförmigen Wandteils (2) positioniert wird und nach Schließen der Form der gebildete Freiraum (2.1) mit Gehäusematerial (3) ausgefüllt wird, dadurch gekennzeichnet, daß als rohrförmiges Wandteil (2) ein Rohrprofilabschnitt verwendet wird, daß die Werkzeugteile (9.1; 9.2) auf die zugeordneten Randabschnitte (2.2; 2.3) des Rohrprofilabschnitts aufgesetzt werden und anschließend der Freiraum (2.1) mit dem Gehäusematerial (3) ausgefüllt und nach dem Erstarren des Gehäusematerials (3) das fertige Kugelgelenk (K) aus dem Werkzeug ausgestoßen wird.

35. Verfahren zur Herstellung eines Kugelgelenks nach Anspruch 34, dadurch gekennzeichnet, daß der Rohrprofilabschnitt in eine drei- oder mehrteilige Spritz- oder Gießform (9) eingelegt wird, daß in die Spritz- oder Gießform (9) die Kugel (4) über ihren Kugelzapfen (6) eingesetzt und an der ihr zugedachten Position bezüglich des Rohrprofilabschnitts positioniert wird, daß dann die Spritz- oder Gießform (9) derart geschlossen wird, daß ein erstes Werkzeugteil (9.1) auf den zugeordneten Randabschnitt (2.2) aufgesetzt wird und die Kugel (4) von diesem Formwerkzeugteil (9.1) von außen um weniger als die Hälfte der Kugeloberfläche umfaßt wird und die verbleibende Kugeloberfläche von einem zweiten, mit dem ersten Formwerkzeugteil (9.1) die Spritz- oder Gießform schließenden Formwerkzeugteil (9.3) geschlossen wird, wobei das zweite Formwerkzeugteil (9.3) die verbleibende Kugeloberfläche in einem Abstand von etwa 0,2 mm bis 3 mm umfaßt, daß in den so gebildeten Formhohlraum (9.4) ein Lagermaterial eingegossen oder eingespritzt und eine Lager-Zwischenschicht (8) gebildet wird, daß nach dem zumindest teilweisen Erstarren der Lager-Zwischenschicht (8) der zweite Formwerkzeugteil (9.3) entfernt und ein dritter Formwerkzeugteil (9.2) auf den anderen .Randabschnitt (2.3) des Rohrprofilabschnitts aufgesetzt wird und die Spritz- oder Gießform (9) schließt und der dadurch entstandene Raum (2.1) zwischen Rohrprofilabschnitt und den Formwerkzeugen (9.1; 9.2; 9.3) mit dem Gehäusematerial (3) ausgegossen oder ausgespritzt wird, so daß die mit der Lager-Zwischenschicht (8) umgebene Kugel (4) an der ihr zugedachten Position in das eingebrachte Gehäusematerial (3) eingeformt und nach Erstarren des Gehäusematerials (3) das fertige Kugelgelenk (K) aus der Form (9) ausgeworfen wird.

36. Verfahren nach Anspruch 34 oder 35, dadurch gekennzeichnet, daß ein im einen Formwerkzeugteil (9.2) vorgesehener verschiebbarer Formstempel (9.30) in Schließstellung des Formwerkzeugs (9.1, 9.2) mit seiner Endfläche gegen die Kugel (4) drückt und einen Abschnitt (4.1) derselben dicht bedeckt, der eine von der Kugelform nach innen abweichende Form besitzt, so daß dieser Abschnitt (4.1) nicht mit Gehäusematerial bedeckt wird.

## Claims

1. Ball joint (K) with a ball joint housing (1) which exhibits a tubular wall part (2) which extends essentially coaxial with the outwardly projecting ball pin (6) carrying the ball (4) and surrounds the ball (4) at a distance, and whereby when the ball (4) is inserted, housing material (3) fills the free space (2.1) formed between the wall part (2) and the ball (4) and surrounds the ball (4) so that this is mounted able to rotate in the housing material (3) in a recess (5) which surrounds the ball (4) by more than its half shell, characterised in that the tubular wall part (2) consists of a tubular profile section with anchoring elements (7) pointing inwards and/or outwards, and in that the cast or injection-moulded housing material (3) only fills the free space (2.1) between the tubular profile section and the ball (4) and extends over the entire length of the tubular profile section but not beyond it, so that the tubular profile section forming the annular wall part (2) forms the entire radial outer wall of the ball joint housing (1).

2. Ball joint according to claim 1, characterised in that a bearing intermediate layer (8) is provided between the recess (5) and the ball (4).

3. Ball joint according to claim 1 or 2, characterised in that the profile cross-section of the wall part (2) is round or oval.

4. Ball joint according to claim 1 or 2, characterised in that the profile cross-section of the wall part (2) is triangular or multisided, for example polygonal, corrugated or serrated.

5. Ball joint according to one of claims 1 to 4, characterised in that the wall part (2) is a casting or injection moulding of metal or of unreinforced plastic or plastic reinforced by means of inlays.

6. Ball joint according to claim 5, characterised in that the wall part (2) made of metal consists of one of the metals aluminium, steel, stainless steel, titanium, magnesium or the like.

7. Ball joint according to claim 5, characterised in that the wall part (2) made of plastic consists of unreinforced plastic or plastic reinforced by means of inlays, said plastic being of or based on polyamide, polyimide, polyurethane, polyethylene, polyepoxide or polyester or two or more of these materials.

8. Ball joint according to one of claims 1 to 7, characterised in that the wall part (2) is an extrusion.

9. Ball joint according to one of claims 1 to 7, characterised in that the wall part (2) is a casting or injection moulding.

10. Ball joint according to one of claims 1 to 9, characterised in that the wall part (2) is an upset tubular profile.

11. Ball joint according to one of claims 1 to 10, characterised in that the wall part (2) is machined by removing material.

12. Ball joint according to one of claims 1 to 11, characterised in that the wall part (2) exhibits inwardly and/or outwardly protruding projections as anchoring elements (7).

13. Ball joint according to claim 12, characterised in that inwardly protruding projections (7) are provided in the edge area (2.2, 2.3) of the wall part (2).

14. Ball joint according to claim 12 or 13, characterised in that the inwardly protruding projections (7) take the form of partially upset or flanged edges or corresponding edge portions.

15. Ball joint according to claim 12 or 13, characterised in that the inwardly protruding projections (7) are manufactured from the material of the inside (2.5) of the wall part (2) by removing material.

16. Ball joint according to one of claims 1 to 15, characterised in that the wall part (2) exhibits inwardly directed and/or outwardly protruding anchoring and/or reinforcing elements running coaxial with the axis of the tube and taking the form of strips (7.1) and/or wings and/or screw attachment surfaces.

17. Ball joint according to one of claims 1 to 16, characterised in that the bearing intermediate layer (8) consists of a material with a low coefficient of friction.

18. Ball joint according to claim 17, characterised in that the bearing intermediate layer (8) consists of plastic.

19. Ball joint according to claim 18, characterised in that the plastic consists of a thermoplastic or a duroplastic, such as polyamide, polyimide or polyethylene, or of polyfluorocarbon or of mixtures of at least two of these materials.

20. Ball joint according to one of claims 1 to 19, characterised in that it has a ball (4) the ball surface of which is not completely formed in a location (4.2) determined in particular by manufacturing requirements, and in that an opening (3.2) extending to the location (4.2) of the ball surface is made in the housing material (3) and possibly also in the bearing intermediate layer (8) by a shaped stamp (9.30) of the shaping tool (9.2).

21. Ball joint according to one of claims 1 to 19, characterised in that when the ball is formed completely, an opening (3.2) extending to the ball surface is made in the housing material (3) and possibly also in the bearing intermediate layer (8) by a shaping stamp (9.30) of the shaping tool (9.2).

22. Ball joint according to claim 20 or 21, characterised in that the opening (3.2) or the opening (3.2) and the incompletely formed location (4.2) is or are provided on the opposite side to the ball pin (6).

23. Ball joint according to one of claims 20 to 23, characterised in that the opening (3.2) is closed with an elastomer or with a rubber.

24. Ball joint according to claim 23, characterised in that a foamed, open-pored elastomer or a corresponding rubber is provided.

25. Ball joint according to one of claims 20 to 24, characterised in that one or individual sealing O-rings (11 and/or 12) is/are inserted, in particular moulded in the end edges (3.11, 3.12).

26. Ball joint according to one of claims 20 to 25, characterised in that at least one compression spring (13), in particular a helical or disc spring, is provided in the opening (3.2) and preloaded against the ball (4) by means of a fixing element (14).

27. Ball joint according to claim 26, characterised in that the fixing element (14) takes the form of a screwed element and the opening (3.2) exhibits a corresponding thread.

28. Ball joint according to claim 27, characterised in that the fixing element (14) is pressed in, welded in, snapped in, glued in or crimped in.

29. Ball joint according to one of claims 26 to 28, characterised in that the fixing element (14) takes the form of a lubricating nipple (15).

30. Ball joint according to one of claims 26 to 29, characterised in that the fixing element (14) consists of metal.

31. Ball joint according to one of claims 26 to 29, characterised in that the fixing element (14) consists of plastic.

32. Ball joint according to one of claims 26 to 31, characterised in that the compression spring(s) (13) consist of metal.

33. Ball joint according to one of claims 26 to 31, characterised in that the compression spring(s) (13) consist of plastic.

34. Method for manufacturing a ball joint according to one of claims 1 to 33, wherein a tubular wall part (2) is laid in a two-piece or multi-piece injection or casting mould (9) and the ball (4) is inserted in the latter a distance from the wall part (2) by means of its ball pin (6) and located in its intended position with respect to the tubular wall part (2) and after the mould is closed, the free space (2.1) formed is filled with housing material (3), characterised in that a tubular profile section is used as the tubular wall part (2), in that the tool parts (9.1; 9.2) are placed on the associated edge sections (2.2; 2.3) of the tubular profile section and then the free space (2.1) is filled with the housing material (3) and after the housing material (3) has solidified, the finished ball joint (K) is expelled from the tool.

35. Method for manufacturing a ball joint according to claim 34, characterised in that the tubular profile section is laid in a three-piece or multi-piece injection or casting mould (9), in that the ball (4) is inserted in the injection or casting mould (9) by means of its ball pin (6) and located in its intended position with respect to the tubular profile section, in that then the injection or casting mould (9) is closed so that a first tool part (9.1) is placed on the associated edge section (2.2) and the ball (4) is embraced by this shaping tool part (9.1) from the outside by less that half the ball surface and the remaining ball surface is closed by a second shaping tool part (9.3) closing the injection or casting mould with the first shaping tool part (9.1), whereby the second shaping tool part (9.3) embraces the remaining ball surface at a distance of approximately 0.2 mm to 3 mm, in that a bearing material is cast or injected into the shaping cavity (9.4) so formed and a bearing intermediate layer (8) is formed, in that after the at least partial solidification of the bearing intermediate layer (8) the second shaping tool part (9.3) is removed and a third shaping tool part (9.2) is placed on the other edge section (2.3) of the tubular profile section and closes the injection or casting mould (9) and the resulting space (2.1) between the tubular profile section and the shaping tools (9.1; 9.2; 9.3) is filled with the cast or injected housing material (3) so that the ball (4) surrounded with the bearing intermediate layer (8) is embedded in its intended position in the introduced housing material (3) and after solidification of the housing material (3) the finished ball joint (K) is ejected from the mould (9).

36. Method according to claim 34 or 35, characterised in that in the closed position of the shaping tool (9.1, 9.2) a displaceable shaping stamp (9.30) provided in one shaping tool part (9.2) bears with its end face against the ball (4) and sealingly covers a section (4.1) thereof which has a shape differing inwardly from the ball shape so that this section (4.1) is not covered with housing material.

## Revendications

1. Joint à rotule (K) avec un carter de joint (1) présentant une portion de paroi (2) de forme tubulaire, qui s'étend pratiquement d'une façon coaxiale au pivot sphérique (6) supportant la sphère (4) et qui entoure celle-ci avec un certain intervalle dans lequel, à la mise en place de la sphère (4), un matériau de carter (3) remplit l'espace libre (2.1) entre la portion de paroi (2) et la sphère (4), et entoure la sphère (4) de sorte que celle-ci se trouve placée dans le matériau de carter (3), en rotation possible dans une cavité (5) entourant la sphère (4) sur plus de la moitié de sa portée,
caractérisé en ce que
- la portion de paroi de forme tubulaire (2) consiste en une section profilée tubulaire avec des éléments d'accrochage (7) vers l'intérieur et/ou l'extérieur, et
- le matériau de carter (3) coulé ou injecté remplit uniquement l'espace libre (2.1) entre la section tubulaire profilée et la sphère (4) et se répand sur toute la longueur de la section tubulaire profilée et non pardessus, de sorte que cette section tubulaire formant la portion de paroi (2) forme la totalité de la paroi radiale extérieure du carter de joint (1).

2. Joint à rotule selon la revendication 1,
caractérisé en ce qu'
entre la cavité (5) et la sphère (4), est prévue une couche intermédiaire faisant fonction de palier (8).

3. Joint à rotule suivant la revendication 1 ou 2,
caractérisé en ce que
la section transversale profilée de la portion de paroi (2) est de forme ronde ou ovale.

4. Joint à rotule suivant la revendication 1 ou 2,
caractérisé en ce que
la section transversale profilée de la portion de paroi (2) est triangulaire ou polygonale, par exemple un polygone ondulé ou dentelé.

5. Joint à rotule suivant les revendications 1 à 4,
caractérisé en ce que
la portion de paroi (2) est une pièce coulée ou injectée, ou une pièce en plastique non renforcée, ou renforcée par des raidisseurs.

6. Joint à rotule suivant la revendication 5,
caractérisé en ce que
la portion de paroi (2), lorsqu'elle est en métal, est constituée de l'un des métaux suivants : aluminium, acier, acier inoxydable, titane, magnésium, ou équivalent.

7. Joint à rotule suivant la revendication 5,
caractérisé en ce que
la portion de paroi (2) est constituée d'une matière plastique non renforcée, ou renforcée au moyen de raidisseurs, en ou à base de polyamide, polyimide, polyuréthane, polyéthylène, polyépoxyde ou polyester ou de deux ou plus de ces composants.

8. Joint à rotule suivant les revendications 1 à 7,
caractérisé en ce que
la portion de paroi (2) est constituée par un produit extrudé.

9. Joint à rotule suivant la revendication 1 à 7,
caractérisé en ce que
la portion de paroi (2) est réalisée en fonte ou en fonte injectée.

10. Joint à rotule suivant l'une des revendications 1 à 9,
caractérisé en ce que
la portion de paroi (2) est constituée par un profilé tubulaire refoulé.

11. Joint à rotule suivant l'une des revendications 1 à 10,
caractérisé en ce que
la portion de paroi (2) est usinée par enlèvement de copeaux.

12. Joint à rotule suivant l'une des revendications 1 à 11,
caractérisé en ce que
la portion de paroi (2) présente comme éléments raidisseurs, des parties saillantes vers l'intérieur et/ou vers l'extérieur.

13. Joint à rotule suivant la revendication 12,
caractérisé en ce que
des parties saillantes (7) vers l'intérieur sont disposées sur les zones périphériques haute et basse(2.2, 2.3) de la portion de paroi (2).

14. Joint à rotule suivant la revendication 12 ou 13,
caractérisé en ce que
les parties saillantes (7) vers l'intérieur sont réalisées sous forme de bord repoussé ou bord rabattu, ou comme ailettes radiales.

15. Joint à rotule suivant la revendication 12 ou 13,
caractérisé en ce que
les parties saillantes vers l'intérieur (7) sont fabriquées par enlèvement de matière de la face interne (2.5) de la portion de paroi (2).

16. Joint à rotule suivant l'une des revendications 1 à 15,
caractérisé en ce que
la portion de paroi (2) présente des éléments d'ancrage, et/ou de renfort, dirigés vers l'intérieur ou s'écartant coaxialement à l'axe tubulaire vers l'extérieur, et conçus pour former des nervures (7.1) et/ou des ailettes et/ou des surfaces à visser.

17. Joint à rotule suivant l'une des revendications 1 à 16,
caractérisé en ce que
la couche intermédiaire faisant fonction de palier (8) est constituée par un matériau à faible coefficient de frottement.

18. Joint à rotule suivant la revendication 17,
caractérisé en ce que
la couche intermédiaire faisant fonction de palier (8) est en matière plastique.

19. Joint à rotule suivant la revendication 18,
caractérisé en ce que
la matière plastique est un thermoplastique ou un thermodurcissable, tel que polyamyde, polyimyde ou polyéthylène ou polyfluorure de carbone ou un mélange d'au moins deux de ces éléments.

20. Joint à rotule suivant l'une des revendications 1 à 19,
caractérisé en ce qu'
- il comporte une sphère (4) dont la surface externe est incomplètement formée à l'emplacement (4.2), en particulier pour les nécessités de la construction, et
- dans le matériau de carter (3) et éventuellement dans la couche intermédiaire faisant fonction de palier (8), on forme, au moyen d'un poinçon (9.30) de l'outil de formage (9.2), une ouverture (3.2) se prolongeant jusqu'à l'emplacement (4.2) de la surface extérieure de la sphère.

21. Joint à rotule suivant l'une des revendications 1 à 19,
caractérisé en ce que
dans le cas d'une sphère complète, on forme, dans le matériau de carter (3), et éventuellement dans la couche intermédiaire faisant fonction de palier (8), au moyen du poinçon (9.30) de l'outil de formage (9.2), une ouverture (3.2) se prolongeant jusqu'à la surface de la sphère.

22. Joint à rotule suivant la revendication 20 ou 21,
caractérisé en ce que
l'ouverture (3.2) ou celle-ci et l'emplacement non entièrement formé (4.2) est disposée ou sont disposés du côté opposé au pivot à rotule (6).

23. Joint à rotule suivant l'une des revendications 20 à 23,
caractérisé en ce que
l'ouverture (3.2) est obturée par un élastomère ou un caoutchouc.

24. Joint à rotule suivant la revendication 23,
caractérisé en ce qu'
il est prévu un élastomère expansé à porosité ouverte, ou un caoutchouc équivalent.

25. Joint à rotule suivant l'une des revendications 20 à 24,
caractérisé en ce qu'
on place sur les bords d'extrémité (3.11, 3.12), un joint torique d'étanchéité ou un pour chacun d'eux (11 et/ou 12), de forme étudiée à cet effet.

26. Joint à rotule suivant une des revendications 20 à 25,
caractérisé en ce que
dans l'ouverture (3.2) on place et on précontraint contre la sphère au moyen d'un élément de fixation (14), au moins un ressort à compression (13), de préférence un ressort à boudin ou ressort à disques.

27. Joint à rotule suivant la revendication 26,
caractérisé en ce que
- l'élément de fixation (14) est conçu comme élément à visser, et
- l'ouverture (3.2) présente un filetage correspondant.

28. Joint à rotule suivant la revendication 27,
caractérisé en ce que
l'élément de fixation (14) est enfoncé à la presse, soudé, encliqueté, encollé ou serti.

29. Joint à rotule suivant l'une des revendications 26 à 28,
caractérisé en ce que
l'élément de fixation (14) est conçu en tant que graisseur (15).

30. Joint à rotule suivant l'une des revendications 26 à 29,
caractérisé en ce que
l'élément de fixation (14) est réalisé en métal.

31. Joint à rotule suivant l'une des revendications 26 à 29,
caractérisé en ce que
l'élément de fixation (14) est réalisé en matière plastique.

32. Joint à rotule suivant l'une des revendications 26 à 31,
caractérisé en ce que
le(les) ressort(s) à compression (13) est (sont) en métal.

33. Joint à rotule suivant l'une des revendications 26 à 31,
caractérisé en ce que
le(les) ressort(s) à compression (13) est(sont) en matière plastique.

34. Procédé de fabrication d'un joint à rotule selon les revendications 1 à 33, dans lequel une portion de paroi (2) de forme tubulaire est insérée dans une pièce moulée ou injectée (9) en deux ou plusieurs parties, la sphère (4) est introduite dans celle-ci avec un certain intervalle par rapport à la portion de paroi (2) par l'intermédiaire de son pivot (6), et on la positionne dans sa position assignée par rapport à la portion de paroi tubulaire (2), et on remplit d'un matériau (3) de carter l'espace libre réalisé (2.1) après fermeture du moule,
caractérisé en ce qu'
- on utilise, comme portion de paroi (2), une section à profil tubulaire, les parties de l'outil (9.1, 9.2) sont montées sur les sections périphériques (2.2, 2.3) disposées à cet effet, de la section à profil tubulaire et ensuite,
- l'espace libre (2.1) est rempli avec le matériau de carter (3), et après durcissement du matériau (3), le joint à rotule (K) est expulsé de l'outil.

35. Procédé de fabrication d'un joint à rotule selon la revendication 34,
caractérisé en ce que
- la section en profil tubulaire est introduite dans un moule de coulée ou d'injection (9) en trois parties ou plus,
- la sphère (4) est introduite par l'intermédiaire du pivot (6) dans le moule de coulée ou d'injection (9) et se trouve positionnée à la distance prévue par rapport à la section à profil tubulaire (2),
- on ferme le moule de coulée ou d'injection de telle sorte qu'une première partie d'outil (9.1) est disposée sur la section périphérique prévue (2.2) et que la sphère (4) est entourée de l'extérieur par cette partie d'outil (9.1), sur moins de la moitié de la surface de cette sphère, et que la partie restante de cette surface est fermée par une deuxième partie d'outil (9.3) en coopération avec la première partie (9.1), la deuxième partie de l'outil (9.3) entourant la surface résiduelle de la sphère avec un intervalle d'environ 0,2 à 3 mm,
- dans l'espace vide (9.4) ainsi formé est coulée ou injectée une matière formant palier et formant une couche intermédiaire (8),
- à la suite du durcissement au moins partiel de cette couche intermédiaire (8), la deuxième partie du moule (9.3) est enlevée et une troisième partie (9.2) est placée au-dessus de l'autre section périphérique (2.3) de la section à profil tubulaire, et ferme la forme coulée ou injectée (9), l'espace ainsi formé (2.1) entre la section en profil tubulaire (2) et les outils de formage (9.1, 9.2, 9.3) recevant, par coulée ou par injection, le matériau de carter (3), de sorte que la sphère (4) entourée par la couche intermédiaire (8) se trouve moulée à sa place assignée dans le matériau de carter (3) introduit et à la suite du durcissement du matériau de carter (3), le pivot terminé (K) est éjecté du moule (9).

36. Procédé selon la revendication 34 ou 35,
caractérisé en ce qu'
un poinçon (9.30) prévu coulissant dans un outil de formage (9.2)+) en formation serrée de l'outil de formage (9.1, 9.2) appuie sa face terminale contre la sphère (4) et recouvre de façon étanche une section (4.1) de la sphère qui définit une forme différente vers l'intérieur de la surface sphérique, de sorte que cette section (4.1) ne soit pas recouverte par le matériau de carter.
